# EUROPEAN PATENT APPLICATION

(11) **EP 4 072 037 A1**
(43) Date of publication of application: **12.10.2022**
(21) Application number: 21167159.9
(22) Date of filing: 07.04.2021
(51) Int. Cl.: H04B 7/155

(54) **METHOD AND APPARATUS FOR EXTENDING INBUILDING RELAY COVERAGE**

(71) Applicant: SK Telecom Co., Ltd., Seoul 04539 (KR)
(72) Inventor: LEE, Dae Young, 04539 Seoul (KR)
(74) Representative: Isarpatent

(57) **Abstract**

The present disclosure in some embodiments relates to an inbuilding relay coverage extension method and apparatus capable of maximizing spatial diversity in place of beamforming which is a major core technology in 5G technology in an inbuilding solution based on an RF repeater and an optical repeater using the beamforming.

## Description

### [Field of the Invention]

The present disclosure in some embodiments relates to a method and an apparatus for extending inbuilding relay coverage. More particularly, the present disclosure relates to a method and an apparatus for extending inbuilding relay coverage by using beam identifications (IDs) in a 5G millimeter wave-based inbuilding solution.

### [Background of the Invention]

The statements in this section merely provide background information related to the present disclosure and may not constitute prior art.

Repeaters are extensively used as a method of cost-effectively increasing coverages in mobile communication systems such as 3G wideband code division multiple access (WCDMA), including existing long term evolution (LTE).

In the meantime, equipment for 3G or LTE networks using a frequency of 3GHz band has been able to use RF repeaters and optical repeaters without significant signal loss, but in a fifth-generation (5G) network which uses mmWave bands of 10GHz or more, the repeaters and inbuilding solutions have become very difficult to implement in terms of cost and performance.

Additionally, since mmWave signals exhibit very large signal loss when passing through cables, feed lines, and aerials, they need such technology that is called beamforming for concentrating radio waves in one direction. To implement such beamforming, a number, N, of array antennas are required to be implemented. Further required are multiple transceivers that can control the respective array antennas and radiate signals, which is a factor in the increase of the cost and difficulty of implementing repeaters and inbuilding equipment.

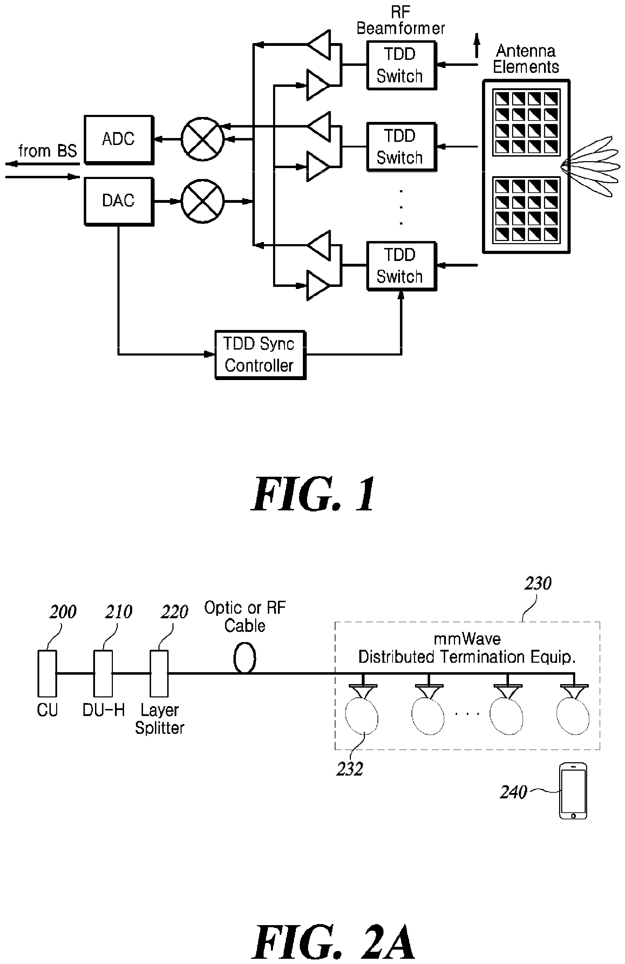

FIG. 1 is a block diagram of an example inbuilding optical repeater system using a plurality of transceiver chips. This system allows services as in existing 3G and LTE systems to be provided inside a building, but it requires multiple transceiver chips to be used to generate multiple beams, which incurs several times the cost compared to using a single transceiver chip in the existing 3G and LTE systems. Additionally, even with beamforming employed, the mmWave signal that is an ultra-high frequency signal is subject to large signal attenuation unless LOS is secured and results in many shadow areas.

### [Disclosure]

### [Technical Problem]

The present disclosure according to some embodiments seeks to provide an inbuilding relay coverage extension method and apparatus capable of maximizing spatial diversity in place of beamforming which is a major core technology in 5G technology in an inbuilding solution based on an RF repeater and an optical repeater using the beamforming.

### [TECHNICAL SOLUTION]

According to an aspect of the present disclosure, an inbuilding relay apparatus is provided including a distributed unit and grouped termination units. The distributed unit configured to transmit data signals including information on beam identification (ID). The grouped termination units are composed of a plurality of termination units each distributively arranged in each of a plurality of areas in a building. The termination units are each configured to receive and make a comparison of the information on beam IDs with matching beam ID information of beam ID pre-matched for the plurality of termination units respectively and to perform signal radiation through an antenna selectively based on a result of the comparison.

According to another aspect of the present disclosure, a termination unit for an inbuilding relay apparatus is provided including a storage unit, a beam ID matcher, and a control unit. The storage unit is configured to store a plurality of matching beam ID information pre-assigned respectively to multiples of the termination unit distributively arranged in each of a plurality of areas in a building. The beam ID matcher configured to receive data signals including information on beam ID from a distributed unit, to compare the information on beam ID with the matching beam ID information corresponding to the termination units respectively, and to make a determination on whether the information on beam ID and the matching beam ID information are matched each other. The control unit is configured to perform signal radiation through an antenna selectively based on a result of the determination.

According to yet another aspect of the present disclosure, a method of extending coverage of an inbuilding relay apparatus is provided including transmitting, by a distributed unit, data signals including information on beam identification (ID) to a plurality of termination units each distributively arranged in each of a plurality of areas in a building, and receiving the information on beam ID by each of the termination units and making a comparison of the information on beam ID with matching beam ID information of beam IDs pre-matched for the plurality of termination units respectively, and performing a signal radiation, by each of the termination units, through an antenna selectively based on a result of the comparison.

### [Advantages of the Invention]

The present disclosure according to some embodiments utilizes antenna termination units distributed cost-effectively when providing 5G services in an inbuilding environment, and where repeaters are used to be able to optimize the coverage performance without using the mmWave beamforming.

Additionally, with the inbuilding relay structure according to at least one embodiment, the present disclosure only needs a relatively very simple digital logic and circuit to drastically reduce the size of the terminal active antenna unit (AAU) while maintaining the overall performance. Further, the present disclosure can reduce the cost by lowering the power consumption.

According to at least one embodiment, the present disclosure can optimize overall power consumption by determining whether an environment involves moving terminal users or sedentary terminal users by using location information applying beamforming.

### [BRIEF DESCRIPTION OF DRAWING]

FIG. 1 is a diagram of an example configuration of a mmWave beamforming-based termination unit.
FIGS. 2A and 2B are schematic block diagrams of inbuilding relay apparatuses according to at least one embodiment of the present disclosure.
FIG. 3 is a diagram illustrating a configuration of a termination unit according to at least one embodiment of the present disclosure.
FIG. 4 is a schematic block diagram of a beam ID decoder according to at least one embodiment of the present disclosure.
FIG. 5 is a diagram for explaining beam ID information according to at least one embodiment of the present disclosure.
FIG. 6 is a schematic block diagram of a 'delay measurement & controller' according to at least one embodiment of the present disclosure.
FIG. 7 is a diagram for explaining a calibration method for compensating signals between termination units for a difference in latency, according to at least one embodiment of the present disclosure.
FIG. 8 is a flowchart of a method of extending an inbuilding relay coverage according to at least one embodiment of the present disclosure.
FIGS. 9A and 9B are exemplary diagrams for explaining the effect of the method of extending an inbuilding relay coverage according to at least one embodiment of the present disclosure.

### [DESCRIPTION OF EMBODIMENTS]

Hereinafter, some embodiments of the present disclosure will be described in detail with reference to the accompanying drawings.

The principal difference between 5G and legacy mobile communication technologies including LTE is beamforming and Multi-User Mulitple-Input Multiple-Output (MIMO). These technologies aim to provide an optimal communication environment between a base station and a terminal by using a plurality of element antennas. Existing mobile communication signals cannot be used in various environments because they use a fixed antenna. However, a 5G network that supports beamforming and MU-MIMO can provide communications by optimizing the beam shape of the transmitted and received signals according to the direction and location of the terminal.

For example, communications by beamforming are performed by selecting a beam in a direction toward a terminal to communicate with depending on the beam to use. When a base station sends each signal called a beam ID after being included in an SS/PBCH block downstream to a termination unit, the beamforming method uses the beam ID for selecting the optimal beam direction. Such equipment including a DU function for each termination unit could select the optimal beam direction through CSI-RS by decoding the 5G frame and thereby achieve the optimal performance between the terminal and the terminal antenna.

On the other hand, the networks making use of such beamforming need to employ multiple transceiver chips for generating multiple beams, which results in a cost increase by several times the existing cases. Additionally, the mmWave signal, due to its very nature, is susceptible to a significant signal attenuation unless LOS is secured and results in many shadow areas.

To solve this issue, the present disclosure in at least one embodiment provides in an indoor space a new inbuilding solution capable of optimizing inbuilding performance for each telecommunication station without complex beamforming. For example, in at least one embodiment, the present disclosure provides a kind of repeater that covers a wide area and maximizes spatial diversity by taking the signal as is coming down from the DU while utilizing a plurality of distributed antennas suitable for a telecommunication station rather than beamforming through an array antenna.

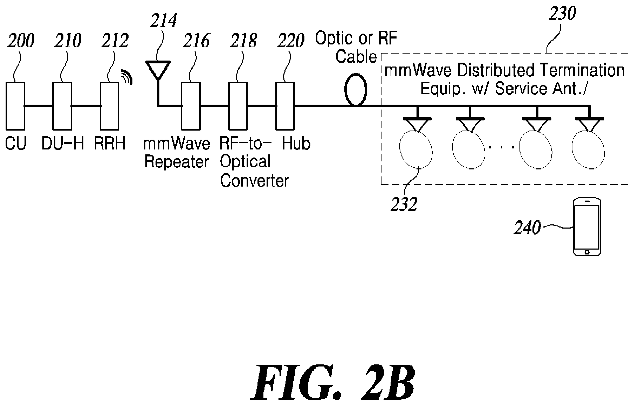

FIGS. 2A and 2B are schematic block diagrams of inbuilding relay apparatuses according to at least one embodiment of the present disclosure.

As shown in FIGA. 2A and 2B, according to some embodiments, the inbuilding relay apparatuses each include a central telecommunication station or central unit (CU) 200, a digital unit or distributed unit (DU-H) 210, a signal distributor (layer splitter/hub) 220, and grouped termination units 230. Here, components included in the network system according to at least one embodiment of the present disclosure are not necessarily limited to those as listed above. For example, when implemented based on an optical repeater, the inbuilding relay apparatus according to at least one embodiment is implemented as shown in FIG. 2A, in which case, a signal optically transmitted through the central unit 200 and the distributed unit 210 may be distributed through the signal distributor 220 to the grouped termination units 230.

In another embodiment, when implemented based on an RF repeater, the inbuilding relay apparatus according to at least one embodiment further includes, as shown in FIG. 2B, an RRH 212, a donor antenna 214, an RF repeater 216, and a radio frequency (RF) to optical converter 218.

In this case, the signal received from the RRH 212 through the donor antenna 214 on a building is amplified through the RF repeater 216, and the amplified signal is optically converted by the RF-to-optical converter 218 and distributed via the signal distributor 220 to the grouped termination units 230.

Hereinafter, the following description about the operation of the inbuilding relay apparatus according to some embodiments concentrates on the works of the main common components of the central unit 200, the digital or distributed unit 210, the signal distributor 220, and the grouped termination units 230.

The central unit 200 serves to integrate the distributed unit 210 responsible for processing digital signals of a base station into a single telecommunication station in the form of a centralized station and to link the distributed unit 210 with a termination unit 232 at a remote location, functioning to amplify and transmit a radio wave to an antenna.

In a 5G scenario, a 5G RAN is supposed to be dividedly operated into and as the central unit 200 and the distributed unit 210. In particular, the central unit 200 contains the functions of upper layers, and the distributed unit 210 holds the functions of lower layers.

This scenario is classified into a high-performance transport type and a low-performance transport type according to the transmission capacity and latency characteristics of the transport equipment (fronthaul) connecting the two units. In the case of a transport that requires high performance, the central unit 200 accommodates many functions of upper to lower layers, and the distributed unit 210 accordingly accommodates relatively few lower-layer functions.

The distributed unit 210 is linked with a plurality of termination units that are the grouped termination units 230 and performs a function of processing data traffic between a terminal 240 linked with the plurality of termination units and an upper core network according to a predefined communication protocol.

The distributed unit 210 performs signaling to provide a communication service to the terminal 240. The distributed unit 210 is linked with a mobile communication network via a backhaul and is linked with the grouped termination units 230 via a fronthaul.

In the inbuilding relay apparatus according to at least one embodiment when implemented based on an optical repeater, the distributed unit 210 connects to the grouped termination units 230 by the medium of a wired optical fiber or RF cable, which allows data signals to be transmitted and received therebetween. On the other hand, when the inbuilding relay apparatus according to at least one embodiment is implemented based on an RF repeater, the distributed unit 210 is implemented to interwork with the RRH 212 to allow data signals to be transmitted and received to and from the grouped termination units 230.

In this embodiment, the distributed unit 210 preloads matching beam ID information of a beam ID pre-matched for each termination unit 232 in the grouped termination units 230. In other words, the distributed unit 210 sets a beam ID allocation table in which information is defined on a unique beam ID corresponding to each of a plurality of termination units 232 distributively arranged respectively in a plurality of areas in the building.

The distributed unit 210 may interwork with the grouped termination units 230 or a repeater control system (EMS), etc. to collect a matching beam ID information corresponding to each termination unit 232.

The distributed unit 210 may generate specific beam ID information based on radio wave environment information, such as location information received for the terminal 240. For example, the distributed unit 210 may select a termination unit disposed at a unique location corresponding to radio wave environment information and generate beam ID information corresponding to the selected termination unit out of the beam ID allocation table.

Thereafter, the distributed unit 210 includes in the data signal the generated beam ID information and transmits the same.

The signal distributor 220 serves to distribute the data signal transmitted from the distributed unit 210 to the grouped termination units 230.

Meanwhile, the signal distributor 220 may be implemented as a layer splitter when the inbuilding relay apparatus according to at least one embodiment is implemented based on an optical repeater.

In another embodiment, the signal distributor 220 may be implemented as a hub device when the inbuilding relay apparatus according to at least one embodiment is implemented based on an RF repeater. On the other hand, in this case, the signal distributor 220 receives and distributes the optically converted signal by the RF-to-optical converter 218 to the grouped termination units 230.

The grouped termination units 230 are composed of a plurality of termination units 232. Meanwhile, the termination unit 232 serves to convert the optical signal provided from the signal distributor 220 into an RF signal and to transmit the RF signal through a remote antenna to the terminal 240 located in an inbuilding shadow area. The termination unit 232, for example, may be a remote unit.

In these embodiments, the termination units 232 are each implemented to be distributively arranged in each of a plurality of areas in the building after they are configured and implemented to allow the least possible signal overlapping adaptive to each telecommunication station. Therefore, the termination units 232 can be implemented to cover a wide area as much as possible instead of the conventional beamforming method and to maximize spatial diversity.

More specifically, according to these embodiments, the termination units 232 when implemented do not just use the multiple beams on the time axis to establish communications but repurpose the beams by assigning them to a plurality of spatially distributed antennas to enable communications.

To this end, at least one of the termination units 232 is pre-assigned with information on IDs of beams according to a unique location for each termination unit. Hereinafter, the pre-assigned information on beam IDs are illustratively referred to as matching beam ID information. In other words, the inbuilding relay apparatus according to at least one embodiment of the present disclosure no more uses beam ID information for beamforming control but utilizes the beam ID information as a control signal that is allocated to a plurality of distributed termination units 232, thereby providing distributed-antenna inbuilding services.

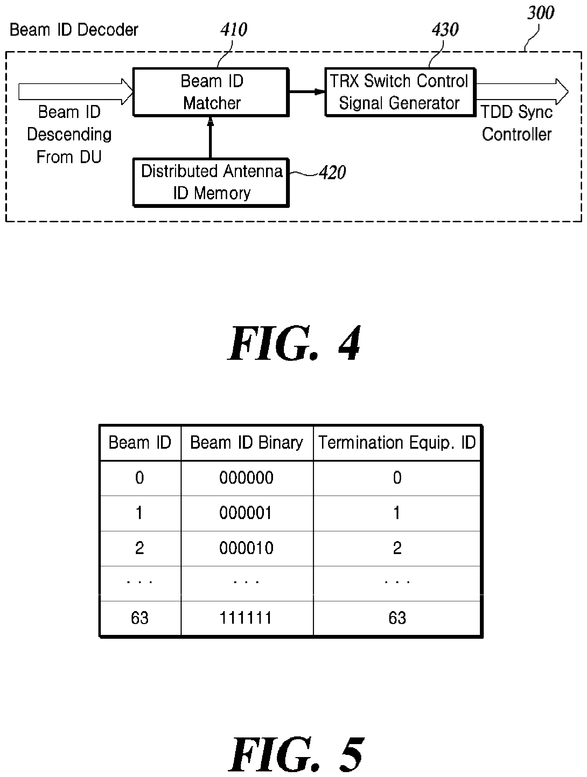

FIG. 5 is a diagram for explaining beam ID information according to at least one embodiment of the present disclosure.

As shown in FIG. 5, the beam ID information according to these embodiments are set according to the number of termination units 232 distributed respectively to multiple areas in the building, and according to its unique location, each termination unit is pre-assigned matching beam ID information.

Meanwhile, although FIG. 5 illustrates that distinctive matching beam ID information is singly allocated to each termination unit, the present disclosure is not so limited.

For example, to at least one of the grouped termination units 230, a plurality of matching beam ID information may be grouped and pre-assigned. For example, the present disclosure may be implemented with a first termination unit assigned beam IDs 0, 1, and 2 and with a second termination unit assigned beam ID 3.

In another embodiment, the grouped termination units 230 may be set so that the one termination unit that is pre-assigned the plurality of matching beam ID information has a neighboring termination unit with matching beam ID information that is identical to any one of the plurality of matching beam ID information. For example, the present disclosure may be implemented with the first termination unit assigned beam IDs 0, 1, and 2 are with the second termination unit assigned beam IDs 2 and 3.

In these embodiments, the form of the matching beam ID information matched to the termination unit 232 is not particularly limited. For example, the matching beam ID information may be set in various ways depending on the strength of a signal radiated to the terminal 240 according to radio wave environment information in a specific shadow area where the terminal 240 is located, or depending on whether the coverage needs to be expanded.

On the other hand, according to some embodiments of the present disclosure, by directly mapping the beam ID information descending from the distributed unit 210 to the termination units 232, the main equipment base station can provide optimal performance using signals with no changes involved. In other words, according to the present disclosure, one can use a completely different type of inbuilding service without modification to an algorithm or a communication method in the upper stage of the distributed unit 210.

The termination unit 232 according to some embodiment of the present disclosure makes a comparison of the information on beam IDs contained in the data signals transmitted from the distributed unit 210 with matching beam ID information of beam IDs pre-matched for the termination units 232 respectively and performs signal radiation through an antenna selectively based on a result of the comparison.

To this end, in some embodiments of the present disclosure, the termination unit 232 receives and sets the matching beam ID information corresponding to the relevant termination unit, and at the same time, utilizes the matching beam ID information received as a reference for filtering other beam ID information.

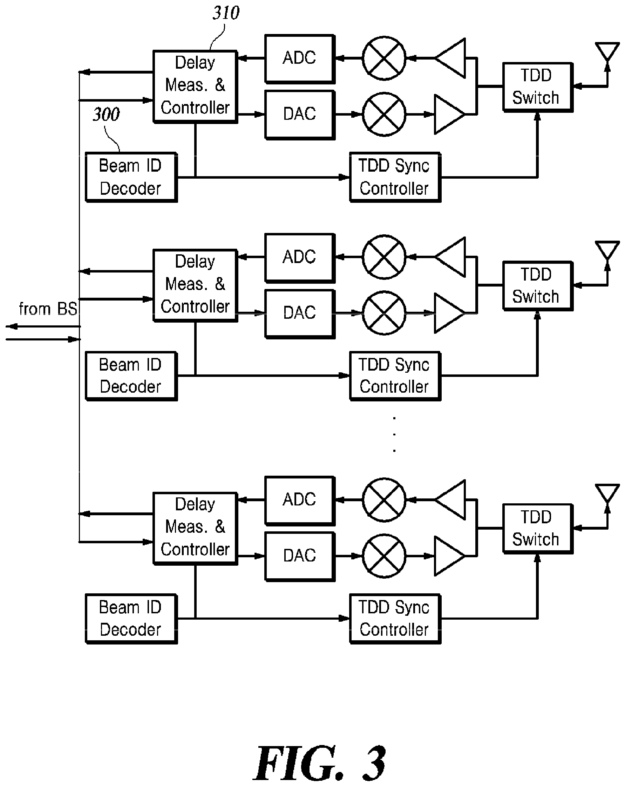

Thus, as shown in FIG. 3, the termination unit 232 according to some embodiments is implemented, including besides the components of the conventional termination unit, a beam ID decoder 300, and a 'delay measurement & controller' 310. On the other hand, with these components used, the termination unit 232 can be configured in the form of a distributed antenna advantageously, involving no modifications to the signals from the main equipment base station.

As shown in FIG. 4, the beam ID decoder 300 according to some embodiments includes a beam ID matcher 410, a memory 420, and a TRX switch control signal generator or switch controller 430.

The beam ID matcher 410 compares the beam ID information in the data signals transmitted from the distributed unit 210 with the matching beam ID information stored on the memory 420 to determine whether there is equality between the beam ID information and the stored matching beam ID information, respectively.

Upon determining that there is equality between the respective beam ID information items, the beam ID matcher 410 recognizes the beam ID information from the distributed unit 210 as a control signal related to the driving of the relevant termination unit 232.

The memory 420 is adapted to receive and store the matching beam ID information pre-matched for the respective termination units and provide the stored matching beam ID information to the beam ID matcher 410. Meanwhile, in some embodiments, when new matching beam ID information is allocated to the relevant termination unit 232 due to a change in radio wave environment information, the memory 420 is provided with the new matching beam ID information transferred to update the pre-stored matching beam ID information. In this case, the change information of the matching beam ID information is preferably provided from an external device including, but not limited to, a repeater control system.

The switch controller 430 is adapted to generate a switch control signal for allowing signals to be selectively radiated to the antenna according to the determination by the beam ID matcher 410. For example, when the beam ID matcher 410 determines that there is equality between the respective beam ID information items, the switch controller 430 generates a switch control signal for performing a transceiver control to operate the antenna, thereby enabling the signals to be radiated.

On the other hand, in some embodiments with the respective termination units 232 distributively arranged in a plurality of areas in the building, in other words, when implementing the inbuilding relay apparatus in the form of a distributed antenna, there may be a difference in latency between signals radiated from the antennas of the respective termination units. In other words, as the antennas implemented on a conventional termination unit are spatially distributed and arranged, a difference occurs in data transmission time between the respective equipment units, which undesirably causes data to be corrupted due to a chance occurrence of an interference signal.

Accordingly, a calibration operation is needed that accurately aligns the time axis between the respective termination units. To this end, the termination unit 232 according to some embodiments is configured to include the delay measurement & controller (or simply "control means") 310.

On the other hand, when the termination unit 232 is in operation, the calibration operation through the control means 310 as described above has difficulty because one does not know the start and end points of the data. Accordingly, the control means 310 according to some embodiments preferably performs the calibration operation as described above when the termination unit 232 is initially booted or rebooted, although the present disclosure is so not limited. For example, the calibration operation of the control means 310 may be performed intermittently when there is little terminal service overnight.

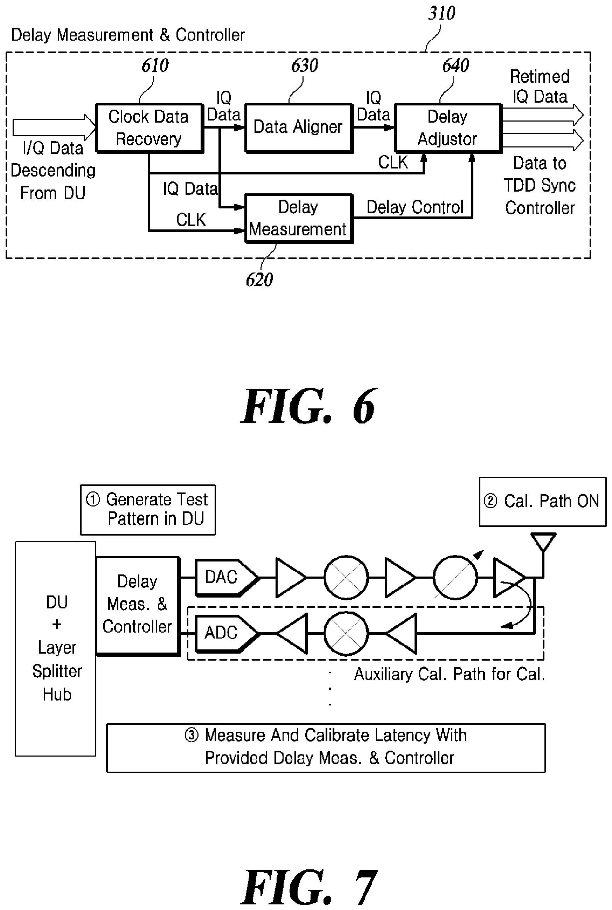

As shown in FIG. 6, the control means 310 includes a clock data recovery unit 610, a delay measurement unit 620, a data aligner 630, and a delay adjustor 640.

By further referring to FIG. 7, the following describes the operations of the respective components of the control means 310 according to some embodiments of the present disclosure.

① The clock data recovery unit 610 is adapted to extract or recover a clock in the digital signals transmitted from the distributed unit 210. In this case, the digital signals from the distributed unit 210 may be I/Q data, preferably a test signal for a calibration operation.

② The delay measurement unit 620 is adapted to measure the rate at which data is received from the distributed unit 210 to the termination unit 232 based on the extracted clock, and based on the measurement, to generate delay information for synchronizing signals between the respective termination units.

The delay measurement unit 620 shares the measured data transmission rate with a preset sharing unit, and receives a correspondingly calculated calibration value from the sharing unit. On the other hand, the sharing unit receives the data transmission rates for the termination units respectively, compares the data transmission rates between each other to calculate delay values (= calibration values) corresponding to the respective termination units, and passes the calculated delay values down to the corresponding termination units. In this case, the sharing unit may preferably be the distributed unit 210 or a repeater control system.

③ The data aligner 630 aligns the time the data is received based on the delay information stored in the delay measurement unit 620.

The delay adjustor 640 performs the time alignment for the clock based on the delay information stored in the delay measurement unit 620.

According to some embodiments of the present disclosure, the termination unit 232 is added with circuits of the beam ID decoder 300 and the control means 310 exclusively, the circuits requiring just relatively simple digital logic and circuits and thereby drastically miniaturizing the termination unit 232 while maintaining the overall performance. Further, the miniaturized circuits of the present disclosure can also lower the power consumption for additional cost savings.

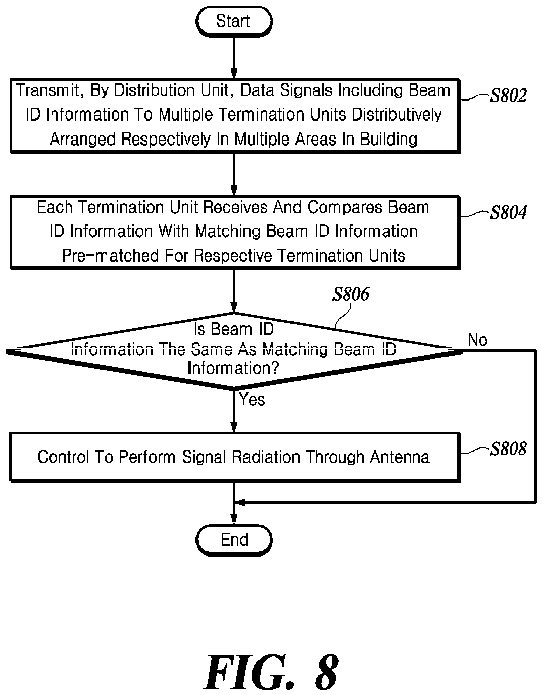

FIG. 8 is a flowchart of a method of extending an inbuilding relay coverage according to at least one embodiment of the present disclosure.

The distributed unit 210 transmits data signals including information on IDs of beams to a plurality of termination units 232 each distributively arranged in each of a plurality of areas in the building (S802). In Step S802, the distributed unit 210 selects a termination unit disposed at a unique location corresponding to the radio wave environment information and generates beam ID information corresponding to the selected termination unit out of the beam ID allocation table.

Each termination unit 232 receives and compares the beam ID information of Step S802 with the matching beam ID information pre-matched for the respective termination units (S804). Meanwhile, the beam ID information are set according to the number of the termination units 232 distributively arranged respectively in a plurality of areas in the building, and the plurality of termination units are each pre-assigned the matching beam ID information according to each unique location.

The termination unit 232 checks whether the beam ID information of Step S802 and the matching beam ID information are the same according to the comparison result of Step S804 (S806).

When Step S806 determines that each beam ID information is the same, the termination unit 232 controls to perform signal radiation through the antenna (S808). In Step S808, the termination unit 232 generates a switch control signal for transceiver controlling and thereby operate the antenna for allowing the signal to be radiated.

Here, since Steps S802 to S808 correspond to the operation of the aforementioned respective components of the inbuilding relay apparatus, further detailed description thereof will be omitted.

Although the steps in FIG. 8 are described to be sequentially performed, they merely instantiate the technical idea of some embodiments of the present disclosure. The present disclosure is well adaptable to various applications by changing the sequence described by FIG. 8 or by performing one or more of the steps in FIG. 8 in parallel, and hence the steps in FIG. 8 are not limited to the illustrated chronological sequence.

As described above, the method of extending the coverage of the inbuilding relay apparatus illustrated in FIG. 8 can be implemented as a computer program and recorded on a computer-readable recording medium such as a CD-ROM, RAM, ROM, a memory card, a hard disk, a magneto-optical disk, a storage device, etc.

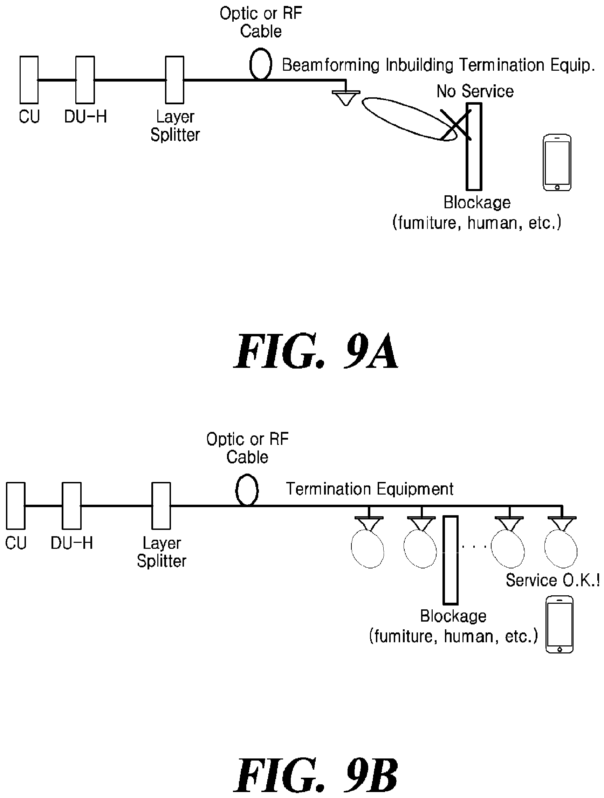

FIGS. 9A and 9B are exemplary diagrams for explaining the effect of the method of extending an inbuilding relay coverage according to at least one embodiment of the present disclosure. FIG. 9A is a diagram illustrating the operation of the existing beamforming-based inbuilding relay apparatus, whereas FIG. 9B is a diagram illustrating the operation of the inbuilding relay apparatus according to at least one embodiment of the present disclosure.

As shown in FIG. 9A, the existing inbuilding relay apparatus can expect optimal performance only when the LOS is secured and suffers from a limitation that it is difficult to provide stable services with a blockage occurring on the LOS line.

On the contrary, as shown in FIG. 9B, with the inbuilding relay apparatus according to at least one embodiment wherein cost-effective repeaters are arranged to best suit a space that provides a service, the present disclosure can provide the best coverage possible.

On the other hand, in implementing the inbuilding relay apparatus according to at least one embodiment wherein the independent beam ID information for the unique locations of a plurality of termination units 232 are used in their intact state, the base station equipment is now allowed to simply analyze the beam ID information usage pattern to immediately render location-based services to be available. For example, simply detecting a significant usage of the termination unit 232 corresponding to specific beam ID information for a specific time can immediately tell whether a terminal is located in the relevant telecommunication station according to the present disclosure, which renders various location-based services to be provided.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand the scope of the claimed invention is not to be limited by the above explicitly described embodiments but by the claims and equivalents thereof.

**[REFERENCE NUMERALS]**

| | |
|---|---|
| 200: central unit | 210: distributed unit |
| 220: signal distributor | 230: grouped termination units |
| 232: termination unit | 300: beam ID decoder |
| 310: delay measurement & controller/control means | |

## Claims

1. An inbuilding relay apparatus, comprising:
a distributed unit configured to transmit data signals including information on beam identification (ID); and
grouped termination units composed of a plurality of termination units each distributively arranged in each of a plurality of areas in a building, the termination units each being configured to receive and make a comparison of the information on beam ID with matching beam ID information of beam IDs pre-matched for the plurality of termination units respectively, and to perform signal radiation through an antenna selectively based on a result of the comparison.

2. The inbuilding relay apparatus of claim 1, wherein the distributed unit is configured to select a termination unit disposed at a unique location corresponding to a radio wave environment, and to include and transmit the information on beam ID corresponding to a selected termination unit in the data signal.

3. The inbuilding relay apparatus of claim 1, further comprising:
a signal distributor configured to distribute the data signal transmitted from the distributed unit to the plurality of termination units.

4. The inbuilding relay apparatus of claim 1, wherein the grouped termination units comprise:
the plurality of termination units each being pre-assigned the matching beam ID information according to each unique location.

5. The inbuilding relay apparatus of claim 4, wherein the grouped termination units comprise:
the plurality of termination units, at least one of which being pre-assigned a plurality of matching beam ID information having been grouped.

6. The inbuilding relay apparatus of claim 5, wherein the one termination unit that is pre-assigned the plurality of matching beam ID information has a neighboring termination unit with matching beam ID information that is identical to any one of the plurality of matching beam ID information.

7. The inbuilding relay apparatus of claim 1, wherein the termination units each include a beam ID decoder configured to be responsive to the information on beam ID received, to determine whether the information on beam ID and a pre-stored matching beam ID information are identical to each other by checking the pre-stored matching beam ID information in a memory, and to generate a switch control signal for driving the antenna in relation to the signal radiation when the information on beam ID and the pre-stored matching beam ID information are identical to each other.

8. The inbuilding relay apparatus of claim 7, wherein the beam ID decoder is configured to interwork with a preset relay control system to perform an adaptive update of the pre-stored matching beam ID information in the memory.

9. The inbuilding relay apparatus of claim 1, wherein the termination units respectively include delay measurement & controllers configured to measure and share a data transmission rate from the distributed unit to each of the termination units, to be provided, from a sharing unit, with a calibration value calculated based on the data transmission rate shared for each of the termination units, and to compensate signals radiated respectively from the termination units for a difference in latency between the signals by using the calibration value.

10. A termination unit for an inbuilding relay apparatus, comprising:
a storage unit configured to store a plurality of matching beam identification (ID) information pre-assigned respectively to multiples of the termination unit distributively arranged in each of a plurality of areas in a building;
a beam ID matcher configured to receive data signals including information on beam ID from a distributed unit, to compare the information on beam ID with the matching beam ID information corresponding to the termination units respectively, and to make a determination on whether the information on beam ID and the matching beam ID information are matched each other; and
a control unit configured to perform signal radiation through an antenna selectively based on a result of the determination.

11. A method of extending coverage of an inbuilding relay apparatus, the method comprising:
transmitting, by a distributed unit, data signals including information on beam identification (ID) to a plurality of termination units each distributively arranged in each of a plurality of areas in a building;
receiving the information on beam ID by each of the termination units and making a comparison of the information on beam ID with matching beam ID information of beam IDs pre-matched for the plurality of termination units respectively; and
performing signal radiation, by each of the termination units, through an antenna selectively based on a result of the comparison.
